# EUROPÄISCHE PATENTSCHRIFT

(11) **EP 1 530 677 B1**
(45) Veröffentlichungstag und Bekanntmachung des Hinweises auf die Patenterteilung: **30.07.2008**
(21) Anmeldenummer: 03792115.2
(22) Anmeldetag: 30.06.2003
(51) Int. Cl.: F02D 41/22, F02D 41/20, F02M 51/06, H01L 41/04

(54) **VERFAHREN UND VORRICHTUNG ZUM BETREIBEN EINES AKTORS MIT EINEM KAPAZITIVEN ELEMENT**
METHOD AND DEVICE FOR OPERATING AN ACTUATOR WITH A CAPACITIVE ELEMENT
PROCEDE ET DISPOSITIF DE FONCTIONNEMENT D'UN ACTIONNEUR POURVU D'UN ELEMENT CAPACITIF

(30) Priorität: 10.08.2002 DE 10236819
(43) Veröffentlichungstag der Anmeldung: 18.05.2005
(73) Patentinhaber: ROBERT BOSCH GMBH, 70442 Stuttgart (DE)
(72) Erfinder: KNICKER, Rainer, 70376 Stuttgart (DE); SCHULZ, Udo, 71665 Vaihingen/Enz (DE); HUBER, Andreas, 71711 Steinheim (DE); RUEGER, Johannes-Joerg, A-1130 Wien (AT)
(86) Internationale Anmeldenummer: PCT/DE2003/002172
(87) Internationale Veröffentlichungsnummer: WO 2004/018860

(56) Entgegenhaltungen:
- EP-A- 1 138 905
- EP-A- 1 139 445
- DE-A- 19 854 306
- DE-A- 19 958 406

## Beschreibung

Die Erfindung betrifft zunächst ein Verfahren zum Betreiben eines Aktors mit einem kapazitiven Element, wobei parallel zu dem kapazitiven Element ein ohmscher Widerstand geschaltet ist und wobei zu bestimmten Zeitpunkten der Wert des ohmschen Widerstands erfasst wird.

### Stand der Technik

Ein Verfahren der eingangs genannten Art ist aus der DE 199 58 406 A1 bekannt. Dort wird ein Piezoaktor beschrieben, welcher bspw. bei einem Kraftstoffeinspritzventil zum Einsatz kommt. Der Piezoaktor verhält sich elektrisch ähnlich wie ein kapazitives Element und wird daher häufig selbst als kapazitives Element bezeichnet. Je nach Ladezustand des kapazitiven Elements ist dieses länger oder kürzer. Die Längenänderung des kapazitiven Elements wird auf ein Ventilelement des Kraftstoffeinspritzventils übertragen.

Bei einer Unterbrechung der Ansteuerung des kapazitiven Elements oder einer Fehlfunktion eines der Bauteile kann der Fall eintreten, dass der kapazitive Steller ständig in einer bestimmten Position verbleibt, da er nicht mehr entladen werden kann. Dies könnte beim Einsatz in einem Kraftstoffeinspritzventil bspw. dazu führen, dass dieses für einen längeren Zeitraum in der offenen Stellung verbleibt und ständig Kraftstoff in den Brennraum der Brennkraftmaschine eingespritzt wird. Dies kann schwere Schäden an der Brennkraftmaschine zur Folge haben.

Um einen solchen Fall zu vermeiden, ist der ohmsche Widerstand vorgesehen. Dieser ermöglicht eine Entladung des kapazitiven Elements auch dann, wenn die eigentliche Steuerleitung (bspw. durch Kabelbruch oder einen Kontaktfehler) unterbrochen ist. Der Wert des ohmschen Widerstands ist dabei so dimensioniert, dass die Zeitkonstante, die sich aus dem kapazitiven Element und dem ohmschen Widerstand ergibt, so groß ist, dass innerhalb der üblichen Ansteuerdauer, die für eine fehlerfreie Einspritzung üblich ist, keine signifikante Entladung des kapazitiven Elements auftritt. Andererseits ist die Zeitkonstante so bemessen, dass innerhalb der Zeit, die maximal zur Verfügung steht, bis das Ventil sicher geschlossen sein muss, um die Brennkraftmaschine nicht zu beschädigen, das kapazitive Element ausreichend entladen ist.

Die DE 199 58 406 A1 schlägt vor, zu bestimmten Zeitpunkten den Wert des ohmschen Widerstands zu erfassen, und hiervon ausgehend auf die Art und/oder die Temperatur des kapazitiven Elements zu schließen. Hierdurch kann die Temperaturabhängigkeit des kapazitiven Elements ausgeglichen werden.

Aufgabe der vorliegenden Erfindung ist es, die Betriebssicherheit bei der Benutzung eines kapazitiven Elements zu erhöhen.

Diese Aufgabe wird bei einem Verfahren der eingangs genannten Art dadurch gelöst, dass die korrekte Funktion des ohmschen Widerstands als Sicherheitseinrichtung überwacht und bei einer erkannten Fehlfunktion ein Fehlersignal ausgegeben wird.

### Vorteile der Erfindung

Durch das erfindungsgemäße Verfahren wird die Funktionsfähigkeit des eine Sicherheitseinrichtung darstellenden ohmschen Widerstands überwacht. Somit können Zustände erkannt werden, in denen diese Sicherheitseinrichtung den ihr zugedachten Zweck nicht mehr erfüllen kann. Dies ermöglicht es wiederum, rechtzeitig bspw. einen Wartungsbetrieb aufzusuchen, der die Sicherheitseinrichtung, also den ohmschen Widerstand repariert und so die Betriebssicherheit bspw. einer Brennkraftmaschine wiederherstellt.

Vorteilhafte Weiterbildungen des erfindungsgemäßen Verfahrens sind in Unteransprüchen angegeben.

In einer ersten Weiterbildung wird vorgeschlagen, dass der Wert des ohmschen Widerstands erfasst und mit einem Grenzwert verglichen wird. Ein entsprechendes Verfahren zur Erfassung des Werts des ohmschen Widerstands ist in der DE 199 58 406 A1 beschrieben, auf deren Offenbarung hiermit ausdrücklich Bezug genommen wird. Die Erfassung des Werts des ohmschen Widerstands und der Vergleich des erfassten Werts mit einem Grenzwert ist eine sehr einfache und zuverlässige Möglichkeit, die Funktionsfähigkeit des ohmschen Widerstands zu überprüfen. Verliert der ohmsche Widerstand nämlich bspw. aufgrund einer schlechten Lötstelle den Kontakt mit dem kapazitiven Element, steigt der Wert des ohmschen Widerstandes stark an. Dies kann durch den beanspruchten Vergleich mit einem Grenzwert eindeutig erkannt werden. Möglich ist auch, dass überwacht wird, ob sich der Wert des ohmschen Widerstands innerhalb eines Toleranzbandes befindet.

In Weiterbildung hierzu wird vorgeschlagen, dass der Wert des ohmschen Widerstands während einer Startphase eines Steuergeräts, mit dem das kapazitive Element angesteuert wird, und/oder während einer Nachlaufphase des Steuergeräts, wenn dieses abgeschaltet wird, erfasst wird. Die oben angesprochene Erfassung des Werts des ohmschen Widerstands ist nicht in jedem Falle während des Normalbetriebs des kapazitiven Elements möglich. Zur Erfassung des Wertes des ohmschen Widerstands kann nämlich (entsprechend dem in der DE 199 58 406 A1 angegebenen Verfahren) ein Laden des kapazitiven Elements auf eine bestimmte Spannung und eine Erfassung der Entladekurve durch den ohmschen Widerstand erforderlich sein. Dabei muss auf eine ausreichend große Spannung geachtet werden, da bei zu kleinen Spannungen der Fehler zu groß wird. Dies ist im Normalbetrieb des kapazitiven Elements nicht realisierbar.

Meist gibt es jedoch vor dem eigentlichen Betrieb des kapazitiven Elements eine Startphase des Steuergeräts, welches das kapazitive Element ansteuert. Während dieser Startphase des Steuergeräts läuft bspw. ein Selbsttest und es werden bestimmte Anfangswerte eingestellt. Gleiches gilt auch für die Nachlaufphase des Steuergeräts, die üblicherweise zu einem kontrollierten Abschalten des kapazitiven Elements und der Einrichtung, in der das kapazitive Element eingesetzt wird, erforderlich ist. Während dieser Phasen wird das kapazitive Element noch nicht bestimmungsgemäß genutzt, so dass hier ein Laden und Entladen zu Prüfzwecken nicht stört.

Vorgeschlagen wird ferner, dass das kapazitive Element in einem Injektor einer Brennkraftmaschine eingesetzt und der Wert des ohmschen Widerstands während eines Schubbetriebs der Brennkraftmaschine erfasst wird. Während eines Schubbetriebs der Brennkraftmaschine wird üblicherweise kein Kraftstoff in die Brennkraftmaschine eingespritzt. Es ist daher sinnvoll, diesen Betriebszustand zur Erfassung des Werts des ohmschen Widerstands zu verwenden.

In besonders vorteilhafter Ausgestaltung des erfindungsgemäßen Verfahrens wird auch vorgeschlagen, dass die korrekte Funktion des kapazitiven Elements überwacht wird. Ein entsprechendes Verfahren hierzu ist in der EP 1 138 905 A1 angegeben. Auf deren Offenbarung wird hiermit ebenfalls ausdrücklich Bezug genommen. Bei diesem erfindungsgemäßen Verfahren wird also einerseits die korrekte Funktion des kapazitiven Elements überwacht, d. h., es wird festgestellt, ob die Ansteuerung vom Steuergerät zum kapazitiven Element in Ordnung ist (Kabelbruch, loser Stecker etc.), und es wird andererseits die korrekte Funktion des ohmschen Widerstands, also der Sicherheitseinrichtung des kapazitiven Elements, überwacht. Bei dieser Weiterbildung des erfindungsgemäßen Verfahrens wird also ein sehr hohes Sicherheitsniveau erreicht.

Dabei wird in Weiterbildung vorgeschlagen, dass dann, wenn festgestellt wird, dass der ohmsche Widerstand korrekt und das kapazitive Element nicht korrekt arbeitet, oder wenn festgestellt wird, dass das kapazitive Element korrekt und der ohmsche Widerstand nicht korrekt arbeitet, ein erstes Fehlersignal ausgegeben wird. Dem Benutzer des kapazitiven Elements wird auf diese Weise eine konkrete Information über diese spezifische Fehlfunktion gegeben. Er kann somit entsprechend reagieren, bspw. einen Wartungsbetrieb aufsuchen.

Dabei wird auch vorgeschlagen, dass das kapazitive Element in einem Injektor einer Brennkraftmaschine eingesetzt wird, und dass das erste Fehlersignal eine Reduktion des maximal zulässigen Drehmoments der Brennkraftmaschine bewirkt. Somit wird die Brennkraftmaschine in einen "Sicherheitszustand" versetzt, in dem sie zwar weiter betrieben werden kann, jedoch nur so, dass keine bleibenden Schäden an der Brennkraftmaschine entstehen.

Dabei wird besonders bevorzugt, dass dann, wenn festgestellt wird, dass einerseits der ohmsche Widerstand und andererseits das kapazitive Element nicht korrekt arbeiten, ein zweites Fehlersignal ausgegeben wird. Hierdurch wird eine gestufte Fehlermeldung geschaffen, die den Benutzer nicht nur über das Vorhandensein einer Fehlfunktion, sondern auch über die Art und die Schwere der Fehlfunktion informiert. Der Benutzer kann somit besonders gut und gezielt auf die gemeldeten Fehlfunktionen reagieren. Dabei versteht sich, dass durch das zweite Fehlersignal eine schwerwiegendere Fehlfunktion als durch erste Fehlersignal angezeigt wird. Wenn nämlich einerseits der ohmsche Widerstand und andererseits das kapazitive Element nicht korrekt arbeiten, bedeutet dies, dass die Gefahr für einen Schaden der mit dem kapazitiven Element betriebenen Vorrichtung besonders hoch ist.

Wenn das kapazitive Element in einem Injektor einer Brennkraftmaschine eingesetzt wird, sollte das zweite Fehlersignal eine Abschaltung des betroffenen Zylinders, eine Reduktion des Kraftstoffdrucks und/oder eine Stilllegung der Brennkraftmaschine bewirken. Diese Maßnahmen reduzieren das Risiko bleibender Schäden an der Brennkraftmaschine oder schließen ein solches Risiko sogar gänzlich aus.

Vorteilhaft ist auch, wenn das erste und/oder das zweite Fehlersignal einen Eintrag in einen Fehlerspeicher und/oder das Auslösen eines spezifischen Alarmsignals bewirken bzw. bewirkt. Hierdurch wird die Diagnose im Wartungsbetrieb und eine angemessene Reaktion durch den Benutzer erleichtert.

Die Erfindung betrifft auch ein Computerprogramm, welches zur Durchführung des obigen Verfahrens geeignet ist, wenn es auf einem Computer ausgeführt wird. Dabei wird besonders bevorzugt, wenn es auf einem Speicher, insbesondere auf einem Flash-Memory, abgespeichert ist.

Weiterhin betrifft die Erfindung ein Steuer- und/oder Regelgerät zum Betreiben einer Brennkraftmaschine. Bei einem solchen Steuer- und/oder Regelgerät wird besonders bevorzugt, wenn es einen Speicher umfasst, auf dem ein Computerprogramm der obigen Art abgespeichert ist.

Ferner ist Gegenstand der vorliegenden Erfindung eine Brennkraftmaschine mit einem Brennraum, mit mindestens einem Injektor, welcher als Aktor ein kapazitives Element umfasst, und welcher einen parallel zu diesem geschalteten ohmschen Widerstand umfasst. Um die Betriebssicherheit der Brennkraftmaschine zu erhöhen, wird vorgeschlagen, dass sie ein Steuer- und/oder Regelgerät der obigen Art umfasst.

### Zeichnung

Nachfolgend wird ein Ausführungsbeispiel der vorliegenden Erfindung unter Bezugnahme auf die beiliegende Zeichnung im Detail erläutert. In der Zeichnung zeigen:
- Figur 1: eine schematische Darstellung einer Brennkraftmaschine mit einem Injektor, welcher einen Piezoaktor umfasst;
- Figur 2: eine Detaillierung des Piezoaktors von Fig. 1 und eines Steuergeräts zu dessen Ansteuerung;
- Figur 3: ein Ablaufdiagramm eines Verfahrens zum Betreiben des Piezoaktors von Fig. 1; und
- Figur 4: ein Ablaufdiagramm eines weiteren Verfahrens zum Betreiben des Piezoaktors von Fig. 1.

### Beschreibung des Ausführungsbeispiels

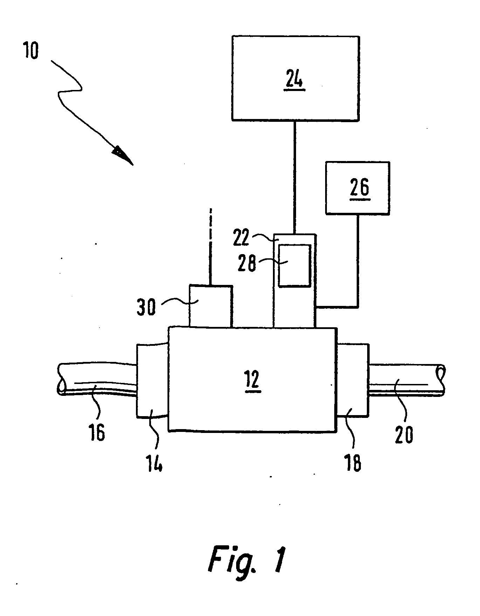

In Fig. 1 trägt eine Brennkraftmaschine insgesamt das Bezugszeichen 10. Sie umfasst einen Brennraum 12, in den Frischluft über ein Einlassventil 14 und ein Ansaugrohr 16 eingebracht wird. Über ein Auslassventil 18 und ein Abgasrohr 20 werden die heißen Verbrennungsabgase aus dem Brennraum 12 abgeführt.

Der Kraftstoff wird in den Brennraum 12 direkt durch einen Injektor 22 eingebracht, der von einem Steuergerät 24 angesteuert wird und den Kraftstoff unter hohem Druck von einem Kraftstoffsystem 26 erhält. Der Injektor 22 umfasst eine in Fig. 1 nicht dargestellte Ventilnadel, welche von einem Piezoaktor 28 betätigt wird. Das im Brennraum 12 nach einer Einspritzung vorhandene Kraftstoff/Luft-Gemisch wird von einer Zündkerze 30 entflammt (dabei sei darauf hingewiesen, dass der Einsatz des Injektors 22 nicht auf Benzin-Brennkraftmaschinen beschränkt ist, sondern auch bei Diesel-Brennkraftmaschinen erfolgen kann).

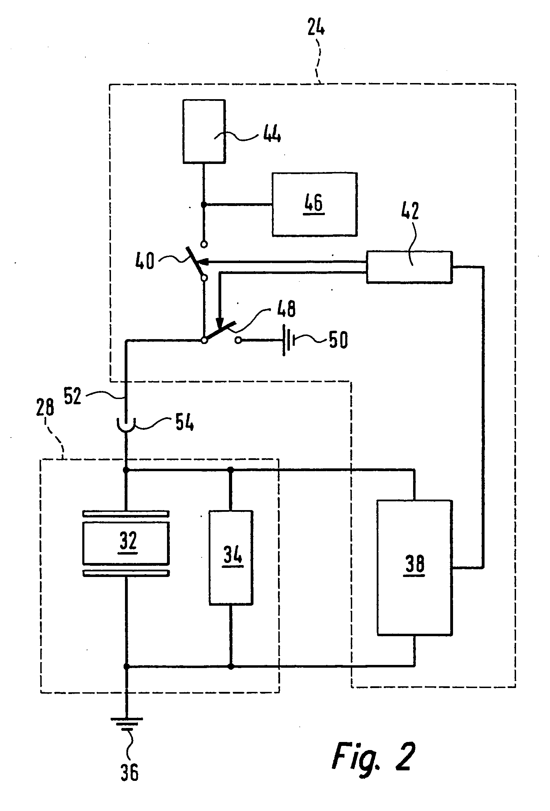

Wie aus Fig. 2 ersichtlich ist, umfasst der Piezoaktor 28 einen Mehrschicht-Piezosteller 32, dessen Länge von seinem elektrischen Ladezustand abhängt. Da ein solcher Mehrschicht-Piezosteller ähnliche elektrische Eigenschaften aufweist wie ein kapazitives Element, wird kann er auch selbst als kapazitives Element bezeichnet werden. Parallel zu dem Mehrschicht-Piezosteller 32 ist ein ohmscher Widerstand 34 geschaltet. Der Mehrschicht-Piezosteller 32 und der ohmsche Widerstand 34 ergeben so ein RC-Glied.

Beispielsweise über einen nicht dargestellten hydraulischen Koppler kann der Piezoaktor 28 mit der Ventilnadel des Injektors 22 verbunden sein und je nach am Mehrschicht-Piezosteller 32 anliegender Spannung die Position der Ventilnadel beeinflussen. In einem nicht dargestellten Ausführungsbeispiel betätigt der Piezoaktor ein hydraulisches Steuerventil, welches durch eine Druckänderung in einem Steuerraum eine Bewegung der Ventilnadel veranlasst.

Der Mehrschicht-Piezosteller 32 und der ohmsche Widerstand 34 sind über ihren einen Anschluss zum einen geerdet (Bezugszeichen 36) und zum anderen mit einem Auswerteblock 38 verschaltet, der Teil des Steuer- und Regelgeräts 24 ist und auf den weiter unten stärker im Detail eingegangen werden wird. Mit ihrem anderen Anschluss sind der Mehrschicht-Piezosteller 32 und der ohmsche Widerstand 34 einerseits ebenfalls mit dem Auswerteblock 38 verbunden und andererseits an einen Endstufenschalter 40 angeschlossen. Wie weiter unten ebenfalls im Detail ausgeführt werden wird, ist es aufgrund der Anschlussweise des Auswerteblocks 38 möglich, durch diesen den Spannungsabfall zu erfassen, welcher über dem RC-Glied 32, 34 eintritt.

Der Endstufenschalter 40 wird von einem Steuerblock 42 angesteuert, welcher unterschiedliche Eingangssignale erhält und verarbeitet, unter anderem auch vom Auswerteblock 38. Über den Endstufenschalter 40 können der Mehrschicht-Piezosteller 32 und der ohmsche Widerstand 34 mit einer Energieversorgung 44 verbunden werden. Zwischen Endstufenschalter 40 und Energieversorgung 44 ist noch eine Überwachungseinrichtung 46 angeordnet, auf deren genaue Funktion ebenfalls weiter unten im Detail eingegangen werden wird.

Vom Steuerblock 42 wird noch ein weiterer Endstufenschalter 48 angesteuert, welcher den anderen Anschluss des kapazitiven Elements 32 und des ohmschen Widerstands 34 erden kann (Bezugszeichen 50). Die Verbindung des Piezoaktors 28 mit dem Steuer- und Regelgerät 24 erfolgt über eine Leitung 52 und einen Stecker 54.

Im Normalbetrieb der Brennkraftmaschine 10 arbeitet der Injektor 22 mit dem Mehrschicht-Piezosteller 32 folgendermaßen: Wenn vom Injektor 22 Kraftstoff in den Brennraum 12 der Brennkraftmaschine 10 eingespritzt werden soll, wird der erste Endstufenschalter 40 vom Steuerblock 42 geschlossen und der zweite Endstufenschalter 48 geöffnet. Somit wird der Mehrschicht-Piezosteller 32 mit der Energieversorgung 44 verbunden. Die nun am kapazitiven Element 32 anliegende Spannung bewirkt eine Verlängerung des kapazitiven Elements, welche, wie oben bereits angedeutet wurde, dazu führt, dass die Ventilnadel des Injektors 22 von einem entsprechenden Ventilsitz abhebt und den Weg für den Kraftstoff von der Kraftstoffversorgung 26 in den Brennraum 12 freigibt.

Wenn die Einspritzung des Kraftstoffs in den Brennraum 12 beendet werden soll, wird der Endstufenschalter 48 vom Steuerblock 42 geschlossen (der Endstufenschalter 40 wurde bereits unmittelbar nach dem Ende des Ladevorgangs wieder geöffnet). Somit sind beide Anschlüsse des Mehrschicht-Piezostellers 32 geerdet (Bezugszeichen 36 und Bezugszeichen 50), so dass sich der Mehrschicht-Piezosteller 32 wieder entlädt und entsprechend verkürzt. Hierdurch kommt die Ventilnadel des Injektors 22 wieder in Anlage an den entsprechenden Ventilsitz, so dass die Verbindung zwischen Kraftstoffsystem 26 und Brennraum 12 wieder unterbrochen wird.

Der sichere Betrieb des kapazitiven Elements 32 ist für die Betriebssicherheit der Brennkraftmaschine insgesamt sehr wichtig. Ohne entsprechende Gegenmaßnahmen könnte es sein, dass, bspw. bei einem Bruch des Kabels 52 oder bei einem lockeren Stecker 54, der Mehrschicht-Piezosteller 32 nicht mehr mit dem Steuer- und Regelgerät 24 verbunden ist und daher nicht mehr angesteuert werden kann. Wird die Verbindung zwischen dem Mehrschicht-Piezosteller 32 und dem Steuer- und Regelgerät 24 unterbrochen, während der Mehrschicht-Piezosteller 32 geladen ist, während also eine Einspritzung von Kraftstoff in den Brennraum 12 der Brennkraftmaschine 10 erfolgt, könnte, ohne entsprechende Gegenmaßnahmen, diese Einspritzung nicht mehr beendet werden. Dies könnte zu schweren Schäden an der Brennkraftmaschine 10 führen.

Um dies zu verhindern, ist parallel zu dem Mehrschicht-Piezosteller 32 der ohmsche Widerstand 34 geschaltet. Dieser ist so dimensioniert, dass die Zeitkonstante, die sich aus dem Mehrschicht-Piezosteller 32 und dem ohmschen Widerstand 34, welche ein RC-Glied bilden, ergibt, so groß ist, dass innerhalb der üblichen Ansteuerdauer, die für eine fehlerfreie Einspritzung von Kraftstoff in den Brennraum 12 erforderlich und üblich ist, keine signifikante Entladung des kapazitiven Elements 32 auftritt. Andererseits ist die Zeitkonstante so bemessen, dass innerhalb der Zeit, die maximal zur Verfügung steht, bis der Injektor 22 sicher geschlossen sein muss, um die Brennkraftmaschine 10 nicht zu beschädigen, der Mehrschicht-Piezosteller 32 ausreichend entladen ist. Bei entsprechender Dimensionierung wirkt der ohmsche Widerstand 34 daher als sog. "Ableitwiderstand".

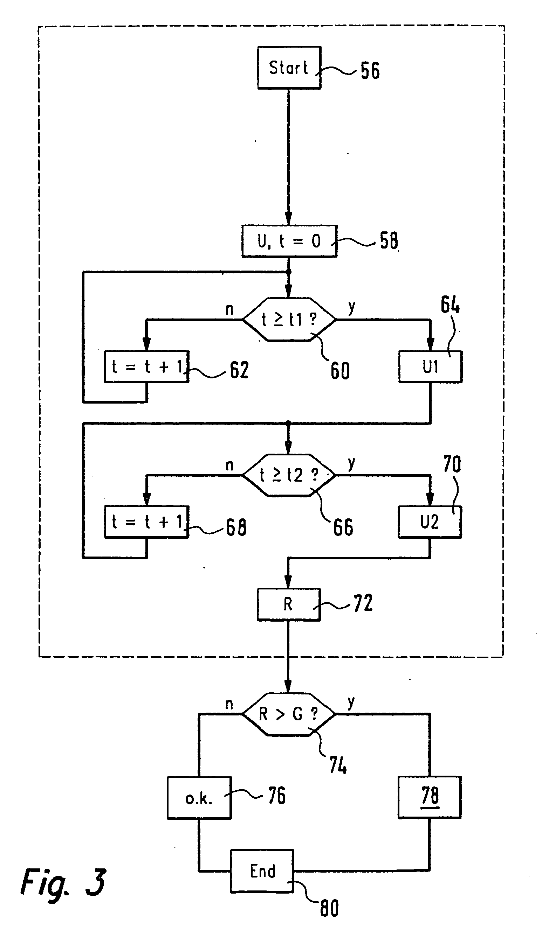

Kommt es also bei geöffnetem Injektor 22 zu einem Bruch der Leitung 52 oder einem Lösen des Steckers 54, wird der Mehrschicht-Piezosteller 32 durch den ohmschen Widerstand 34 entladen und so der Injektor 22 wieder geschlossen. Beim ohmschen Widerstand 34 handelt es sich also um eine wichtige Sicherheitseinrichtung des Injektors 22. Durch die Kenntnis der Funktionsfähigkeit dieser Sicherheitseinrichtung kann somit die Betriebssicherheit insgesamt der Brennkraftmaschine 10 erhöht werden. Die Funktionsfähigkeit des ohmschen Widerstands 34 wird während eines Schubbetriebs der Brennkraftmaschine, während des Hochlaufs und während des Nachlaufs des Steuer- und Regelgeräts 24 folgendermaßen festgestellt (vgl. Fig. 3):

Das in Fig. 3 dargestellte Verfahren beginnt mit einem Startblock 56. Nach diesem wird im Block 58 der Mehrschicht-Piezosteller 32 auf eine definierte Spannung U aufgeladen. Gleichzeitig wird ein Zeitzähler t mit 0 gesetzt. Die anschließende Abfrage im Block 60 überprüft, ob der Wert des Zeitzählers t größer als oder gleich wie eine Zeitschwelle t1 ist. Ist dies nicht der Fall, so wird in 62 der Zeitzähler erhöht und es erfolgt erneut die Abfrage im Block 60. Ist der Zeitzähler t größer als oder gleich wie die Zeitschwelle t1, so wird im Block 64 die Spannung U1 zu diesem Zeitpunkt t1 gemessen.

Im nachfolgenden Schritt 66 erfolgt die Abfrage, ob der Inhalt des Zeitzählerst größer oder gleich einer zweiten Zeitschwelle t2 ist. Ist dies nicht der Fall, so wird im Block 68 der Zeitzähler erhöht. Ist dies der Fall, so wird im Block 70 der Wert U2 der Spannung zum Zeitpunkt t2 ermittelt.

Bei dem RC-Glied, welches durch den Mehrschicht-Piezosteller 32 und den ohmschen Widerstand 34 gebildet wird, fällt die Spannung gemäß einer Exponentialfunktion mit der Zeit ab, wobei die Exponentialfunktion im Wesentlichen durch eine Zeitkonstante bestimmt wird. Durch Messen der Spannung U1 zum Zeitpunkt t1 und der Spannung U2 zum Zeitpunkt t2 kann die Zeitkonstante und damit bei bekannter Kapazität des kapazitiven Elements 32 der Wert R des ohmschen Widerstands 34 bestimmt werden. Diese Berechnung des Wertes R erfolgt im Block 72.

Anschließend wird im Block 74 abgefragt, ob der Wert R größer als ein Grenzwert G ist. Ist die Antwort auf die Abfrage im Block 74 "nein", bedeutet dies, dass der ohmsche Widerstand 34 korrekt arbeitet (Block 76). Ist dagegen bspw. eine Lötstelle, mit der der ohmsche Widerstand 34 mit dem Mehrschicht-Piezosteller 32 verbunden ist, defekt, steigt der Wert R des ohmschen Widerstands 34 stark an und überschreitet den Grenzwert G. In diesem Fall ist die Antwort in der Abfrage 74 "ja", und es erfolgt eine weiter unten im Detail dargestellte Verarbeitung dieses logischen Signals im Block 78. Die Überprüfung der Funktionstüchtigkeit des ohmschen Widerstands 34 endet in einem Endblock 80.

Das oben beschriebene Verfahren wird auch in der DE 199 58 406 A1 beschrieben, deren Offenbarung hiermit ausdrücklich zum Gegenstand der vorliegenden Anmeldung gemacht wird.

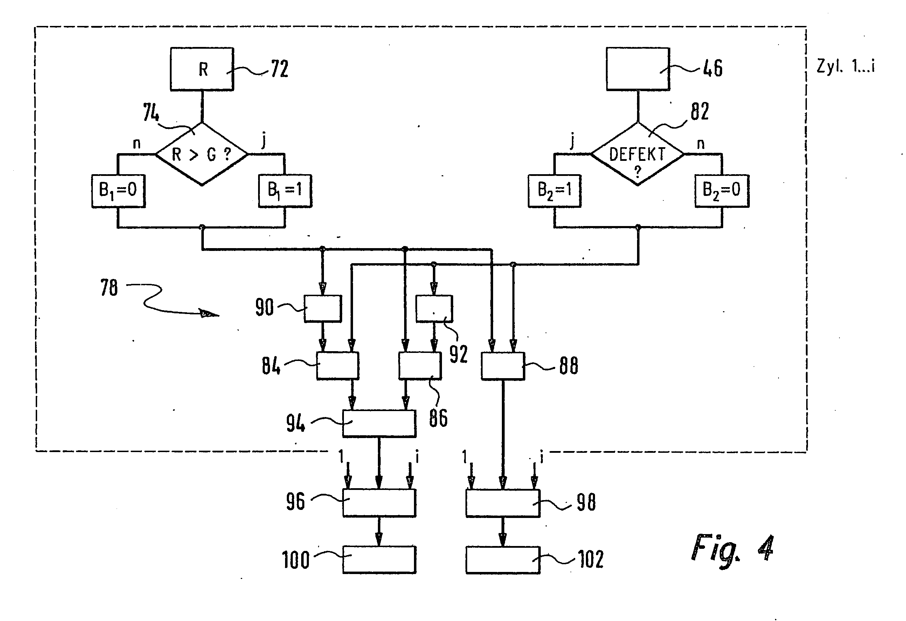

In Fig. 4 ist die Verarbeitung im Verarbeitungsblock 78 im Detail dargestellt. Diese beinhaltet im Wesentlichen eine Verknüpfung des logischen Ergebnisses "ja" des Abfrageblocks 74 mit den logischen Ergebnissen der Diagnose der Funktionstüchtigkeit des kapazitiven Elements 32 durch den Überwachungsblock 46 (vgl. Fig. 2). Im Block 82 wird abgefragt, ob der Mehrschicht-Piezosteller 32 funktionstüchtig ist oder nicht. Wenn ein Defekt vorliegt, wird am Ausgang des Blocks 82 ein Bit B₂ = 1 gesetzt. Liegt kein Defekt vor, wird am Ausgang des Blocks 82 das Bit B₂ = 0 gesetzt. Analog hierzu wird ein Bit B₁ am Ausgang der Abfrage 74 = 1 gesetzt, wenn der Wert R des ohmschen Widerstands 34 größer als der Grenzwert G ist, wenn also ein Defekt an dem ohmschen Widerstand 34 vorliegt. Das gleiche Bit B₁ wird zu 0, wenn der ohmsche Widerstand 34 fehlerfrei arbeitet.

Die jeweiligen Ausgänge der Abfragen 74 und 82 werden in drei logische AND-Blöcke 84, 86 und 88 eingespeist. Dabei wird der Ausgang des Abfrageblocks 74 vor der Einspeisung in den Block 84 im Block 90 invertiert, und der Ausgang des Abfrageblocks 82 wird vor der Einspeisung in den Block 86 im Block 92 invertiert. Die beiden AND-Blöcke 84 und 86 sind ausgangsseitig mit einem OR-Glied 94 verbunden, dessen Ausgang wieder mit einem OR-Glied 96 verbunden ist. Der Ausgang des AND-Blocks 88 führt direkt zu einem OR-Glied 98.

Durch die OR-Glieder 96 und 98 wird sichergestellt, dass das in Fig. 4 beschriebene Verfahren für sämtliche Zylinder 1 bis i der Brennkraftmaschine 10 durchgeführt wird. Der Ausgang des OR-Glieds 96 führt zu einem Alarmblock 100, der Ausgang des OR-Glieds 98 zu einem zweiten Alarmblock 102.

Wenn beide Bits B₁ und B₂ = 0 sind (kapazitives Element 32 und ohmscher Widerstand 34 arbeiten jeweils korrekt), liegt auch an den Ausgängen der AND-Blöcke 84, 86 und 88 jeweils ein Bit 0 an, so dass letztlich weder der Alarmblock 100 noch der Alarmblock 102 aktiviert wird. Wenn jedoch das Bit B₁ = 1 ist (ohmscher Widerstand 34 defekt) und das Bit B₂ = 0 ist (kapazitives Element 32 arbeitet korrekt), führt dies am Ausgang des AND-Blocks 86 zu einem Bit = 1, so dass schließlich der Alarmblock 100 aktiviert wird.

Gleiches gilt auch für den Fall, dass das Bit B₁ = 0 ist (ohmscher Widerstand 34 arbeitet korrekt), jedoch das Bit B₂ = 1 ist (kapazitives Element 32 defekt). In diesem Fall liegt am Ausgang des AND-Blocks 84 der logische Wert 1 an, was über das OR-Glied 94 ebenfalls letztlich zur Aktivierung des Alarmblocks 100 führt. Wenn schließlich das Bit B₁ = 1 ist (ohmscher Widerstand 34 defekt) und das Bit B₂ = 1 ist (kapazitives Element 32 defekt), dann führt dies am Ausgang des AND-Blocks 88 zu einem Bit = 1, was letztlich zur Aktivierung des Alarmblocks 102 führt.

Durch den Alarmblock 100 wird ein Eintrag in einen Fehlerspeicher und das Aufleuchten einer Warnlampe bewirkt. Ferner wird das von der Brennkraftmaschine 10 maximal erzeugbare Drehmoment reduziert. Bei einer Aktivierung des Alarmblocks 102 dagegen wird der betroffene Zylinder abgeschaltet, der Kraftstoffdruck reduziert und, ggf., die Brennkraftmaschine 10 insgesamt abgeschaltet. Das in Fig. 4 dargestellte Verfahren erlaubt also eine gestufte Reaktion je nachdem, ob entweder nur der Piezosteller 32 oder nur der ohmsche Widerstand 34 oder ob gleichzeitig sowohl der Piezosteller 32 als auch der ohmsche Widerstand 34 defekt sind.

## Patentansprüche

1. Verfahren zum Betreiben eines Aktors (28) mit einem kapazitiven Element (32), wobei parallel zu dem kapazitiven Element (32) ein ohmscher Widerstand (34) geschaltet ist, und wobei zu bestimmten Zeitpunkten der Wert (R) des ohmschen Widerstands (34) erfasst wird, **dadurch gekennzeichnet, dass** die korrekte Funktion des ohmschen Widerstands (34) als Sicherheitseinrichtung überwacht (74) und bei einer erkannten Fehlfunktion ein Fehlersignal (100, 102) ausgegeben wird.

2. Verfahren nach Anspruch 1, **dadurch gekennzeichnet, dass** der Wert (R) des ohmschen Widerstands (34) erfasst und mit einem Grenzwert (G) verglichen wird.

3. Verfahren nach Anspruch 2, **dadurch gekennzeichnet, dass** der Wert (R) des ohmschen Widerstands (34) während einer Startphase eines Steuergeräts (24), mit dem das kapazitive Element (32) angesteuert wird, und/oder während einer Nachlaufphase des Steuergeräts (24), wenn dieses abgeschaltet wird, erfasst wird.

4. Verfahren nach einem der Ansprüche 2 oder 3, **dadurch gekennzeichnet, dass** das kapazitive Element (32) in einem Injektor (22) einer Brennkraftmaschine (10) eingesetzt und der Wert (R) des ohmschen Widerstands (34) während eines Schubbetriebs der Brennkraftmaschine (10) erfasst wird.

5. Verfahren nach einem der vorhergehenden Ansprüche, **dadurch gekennzeichnet, dass** die korrekte Funktion des kapazitiven Elements (32) überwacht wird (46, 82).

6. Verfahren nach Anspruch 5, **dadurch gekennzeichnet, dass** dann, wenn festgestellt wird, dass der ohmsche Widerstand (34) korrekt und das kapazitive Element (32) nicht korrekt arbeiten, oder wenn festgestellt wird, dass das kapazitive Element (32) korrekt und der ohmsche Widerstand (34) nicht korrekt arbeiten, ein erstes Fehlersignal (100) ausgegeben wird.

7. Verfahren nach Anspruch 6, **dadurch gekennzeichnet, dass** das kapazitive Element (32) in einem Injektor (22) einer Brennkraftmaschine (10) eingesetzt wird, und dass das erste Fehlersignal (100) eine Reduktion des maximal zulässigen Drehmoments der Brennkraftmaschine (10) bewirkt.

8. Verfahren nach einem der Ansprüche 5 bis 7, **dadurch gekennzeichnet, dass** dann, wenn festgestellt wird, dass einerseits der ohmsche Widerstand (34) und andererseits das kapazitive Element (32) nicht korrekt arbeiten, ein zweites Fehlersignal (102) ausgegeben wird.

9. Verfahren nach Anspruch 8, **dadurch gekennzeichnet, dass** das kapazitive Element (32) in einem Injektor (22) einer Brennkraftmaschine (10) eingesetzt wird, und dass das zweite Fehlersignal (102) eine Abschaltung des betroffenen Zylinders, eine Reduktion des Kraftstoffdrucks, und/oder eine Stilllegung der Brennkraftmaschine (10) bewirkt.

10. Verfahren nach einem der Ansprüche 6 bis 9, **dadurch gekennzeichnet, dass** das erste und/oder das zweite Fehlersignal (100, 102) einen Eintrag in einen Fehlerspeicher und/oder das Auslösen eines Alarmsignals bewirken bzw. bewirkt.

11. Computerprogramm, **dadurch gekennzeichnet, dass** es zur Durchführung des Verfahrens nach einem der vorhergehenden Ansprüche programmiert ist.

12. Elektrisches Speichermedium für ein Steuer- und Regelgerät (24) einer Brennkraftmaschine (10), **dadurch gekennzeichnet, dass** auf ihm ein Computerprogramm zur Anwendung in einem Verfahren nach einem der Ansprüche 1 bis 11 abgespeichert ist.

13. Steuer- und/oder Regelgerät (24) zum Betreiben eines Stellers (28) mit einem kapazitiven Element (32), **dadurch gekennzeichnet, dass** es Mittel zur Durchführung der Schritte des Verfahrens nach einem der Ansprüche 1 bis 10 umfasst.

## Claims

1. Method for operating an actuator (28) with a capacitive element (32), wherein an ohmic resistor (34) is connected parallel to the capacitive element (32), and wherein the value (R) of the ohmic resistor (34) is measured at certain times, **characterized in that** the correct function of the ohmic resistor (34) is monitored (74) as a safety device, and when a malfunction is detected a fault signal (100, 102) is output.

2. Method according to Claim 1, **characterized in that** the value (R) of the ohmic resistor (34) is measured and compared with a limiting value (G).

3. Method according to Claim 2, **characterized in that** the value (R) of the ohmic resistor (34) is measured during a starting phase of a control unit (24) with which the capacitive element (32) is actuated, and/or during a run-on phase of the control unit (24) if the latter is switched off.

4. Method according to one of Claims 2 or 3, **characterized in that** the capacitive element (32) is inserted into an injector (22) of an internal combustion engine (10), and the value (R) of the ohmic resistor (34) is measured during an overrun operation of the internal combustion engine (10).

5. Method according to one of the preceding claims, **characterized in that** the correct function of the capacitive element (32) is monitored (46, 82).

6. Method according to Claim 5, **characterized in that** if it is detected that the ohmic resistor (34) is operating correctly and the capacitive element (32) is not operating correctly, or if it is detected that the capacitive element (32) is operating correctly and the ohmic resistor (34) is not operating correctly, a first fault signal (100) is output.

7. Method according to Claim 6, **characterized in that** the capacitive element (32) is inserted into an injector (22) of an internal combustion engine (10), and **in that** the first fault signal (100) brings about a reduction in the maximum permissible torque of the internal combustion engine (10).

8. Method according to one of Claims 5 to 7, **characterized in that** if it is detected that both the ohmic resistor (34) and the capacitive element (32) are not operating correctly, a second fault signal (102) is output.

9. Method according to Claim 8, **characterized in that** the capacitive element (32) is inserted into an injector (22) of an internal combustion engine (10), and **in that** the second fault signal (102) causes the affected cylinder to be shut down, the fuel pressure to be reduced and/or the internal combustion engine (10) to be deactivated.

10. Method according to one of Claims 6 to 9, **characterized in that** the first and/or second fault signals (100, 102) cause an entry to be made in a fault signal and/or bring about the triggering of an alarm signal.

11. Computer program, **characterized in that** it is programmed to be carry out the method according to one of the preceding claims.

12. Electrical storage medium for an open-loop and closed-loop control unit (24) of an internal combustion engine (10), **characterized in that** a computer program for application in a method according to one of Claims 1 to 11 is stored in said storage medium.

13. Open-loop and/or closed-loop control unit (24) for operating an actuator element (28) with a capacitive element (32), **characterized in that** said open-loop and/or closed-loop control unit (24) comprises means for carrying out the steps of the method according to one of Claims 1 to 10.

## Revendications

1. Procédé de gestion d'un actionneur (28) comportant un élément capacitif (32) et une résistance ohmique (34) en parallèle à l'élément capacitif (32) et selon lequel à certains instants, on saisit la valeur (R) de la résistance ohmique (34),
**caractérisé en ce qu'**
on surveille (74) le fonctionnement correct de la résistance ohmique (34) comme installation de sécurité et en cas de défaut de fonctionnement détecté on émet un signal de défaut (100, 102).

2. Procédé selon la revendication 1,
**caractérisé en ce qu'**
on saisit la valeur (R) de la résistance ohmique (34) et on la compare à une valeur limite (G).

3. Procédé selon la revendication 2,
**caractérisé en ce qu'**
au cours d'une phase de démarrage d'un appareil de commande (24) qui commande l'élément capacitif (32) et/ou pendant la phase de fin de course de l'appareil de commande (24) lorsque celui-ci est coupé, on saisit la valeur (R) de la résistance ohmique (34).

4. Procédé selon l'une des revendications 2 ou 3,
**caractérisé en ce qu'**
on applique l'élément capacitif (32) à un injecteur (22) d'un moteur à combustion interne (10) et on saisit la valeur (R) de la résistance ohmique (34) lorsque le moteur à combustion interne (10) fonctionne en mode de poussée.

5. Procédé selon l'une des revendications précédentes,
**caractérisé en ce qu'**
on surveille (46, 82) le fonctionnement correct de l'élément capacitif (32).

6. Procédé selon la revendication 5,
**caractérisé en ce que**
lorsqu'on constate que la résistance ohmique (34) fonctionne correctement et que l'élément capacitif (32) ne fonctionne pas correctement ou si l'on constate que l'élément capacitif fonctionne correctement et que la résistance ohmique (34) ne fonctionne pas correctement, on émet un premier signal de défaut (100).

7. Procédé selon la revendication 6,
**caractérisé en ce que**
l'élément capacitif (32) est appliqué à un injecteur (22) d'un moteur à combustion interne (10) et
un premier signal de défaut (100) produit une réduction du couple maximum autorisé du moteur à combustion interne (10).

8. Procédé selon l'une des revendications 5 à 7,
**caractérisé en ce que**
on émet un second signal de défaut (102), si l'on constate que d'une part la résistance ohmique (34) et d'autre part l'élément capacitif (32) ne fonctionnent pas correctement.

9. Procédé selon la revendication 8,
**caractérisé en ce qu'**
on applique l'élément capacitif (32) à un injecteur (22) d'un moteur à combustion interne (10) et le second signal de défaut (102) produit la coupure du cylindre concerné, une réduction de la pression du carburant et/ou l'arrêt du moteur à combustion interne (10).

10. Procédé selon l'une des revendications 6 à 9,
**caractérisé en ce que**
le premier et/ou le second signal de défaut (100, 102) assurent un enregistrement dans une mémoire de défaut et/ou le déclenchement d'un signal d'alarme.

11. Programme d'ordinateur
**caractérisé en ce qu'**
il est programmé pour exécuter le procédé selon l'une des revendications précédentes.

12. Support de mémoire électrique pour un appareil de commande et de régulation (24) d'un moteur à combustion interne (10),
**caractérisé en ce qu'**
il contient l'enregistrement d'un programme d'ordinateur pour l'application d'un procédé selon l'une des revendications 1 à 11.

13. Appareil de commande et/ou de régulation (24) pour la gestion d'un actionneur (28) comportant un élément capacitif (32),
**caractérisé en ce qu'**
il comprend des moyens pour exécuter les étapes du procédé selon l'une des revendications 1 à 10.
